(19) Europäisches Patentamt
European Patent Office
Office européen des brevets

(11) Numéro de publication: **0 263 043 B1**

(12) # FASCICULE DE BREVET EUROPEEN

(45) Date de publication du fascicule du brevet: **24.10.90**

(51) Int. Cl.⁵: **G11B 5/704,** B29D 17/00

(21) Numéro de dépôt: **87420254.2**

(22) Date de dépôt: **24.09.87**

(54) **Substrat polymère rigide utilisable comme support d'enregistrement magnétique et le disque magnétique obtenu à partir de ce substrat.**

(30) Priorité: **29.09.86 FR 8613714**

(43) Date de publication de la demande:
**06.04.88 Bulletin 88/14**

(45) Mention de la délivrance du brevet:
**24.10.90 Bulletin 90/43**

(84) Etats contractants désignés:
**AT BE CH DE ES FR GB GR IT LI LU NL SE**

(56) Documents cités:
**EP-A- 0 155 452**
**EP-A- 0 171 063**
**EP-A- 0 178 836**

(73) Titulaire: **RHONE-POULENC CHIMIE, 25, quai Paul Doumer, F-92408 Courbevoie Cédex(FR)**

(72) Inventeur: **Bonnebat, Claude, 5, rue Alfred-de-Musset, F-77340 Pontault-Combault(FR)**
Inventeur: **Morin, Alain, 21, rue Francis-Chirat, F-69100 Villeurbanne(FR)**
Inventeur: **Quentin, Jean-Pierre, 35, rue Joliot-Curie, F-69005 Lyon(FR)**

(74) Mandataire: **Trolliet, Maurice et al, RHONE-POULENC INTERSERVICES Service Brevets Chimie Centre de Recherches des Carrières B.P. 62, F-69192 Saint-Fons Cédex(FR)**

EP 0 263 043 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un substrat polymère rigide à base de polymère thermotrope utilisable comme support d'enregistrement magnétique. Elle concerne également les disques d'enregistrement magnétiques faits à partir dudit substrat.

Les disques d'enregistrement magnétiques consistent, comme ceci est bien connu dans la technique, en un substrat rigide, circulaire, lisse et mince (épaisseur de l'ordre de 1 à 2 mm) présentant en général au centre un évidement coaxial destiné à recevoir des moyens de maintien et d'entrainement adéquats, et comportant sur au moins une de ses faces un revêtement magnétique approprié de très faible épaisseur (par exemple 0,3 à 0,5 µm dans le cas des couches magnétiques à base de pigments magnétiques ou 0,05, à 0,2 µm dans le cas de disques à couche mince métallique).

Au dessus du revêtement magnétique, on dispose de manière connue en soi une ou plusieurs têtes magnétiques d'écriture-lecture qui, au moment de la mise en rotation du disque (vitesse de rotation de l'ordre de 3 600 tours/minute), "volent" à une hauteur de l'ordre de 0,2 à 0,6 µm au-dessus de la surface du disque.

Pour assurer la parfaite stabilité de la position de la tête par rapport au disque, le substrat entrant dans la constitution de ce disque doit satisfaire à un certain nombre d'exigences, dont les principales sont les suivantes :

- une haute rigidité (marquée notamment par un module d'élasticité élevé) pour éviter un phénomène de voilage sous l'effet de sollicitations,
- un excellent état de surface (marqué notamment par une faible rugosité),
- une haute stabilité dimensionelle vis à vis de la température ou de l'humidité (marquée notamment par un faible coefficient d'expansion thermique dans le sens radial),
- un moment d'inertie faible (marqué notamment par une valeur basse de la densité),
- une bonne tenue chimique et thermique (marquée notamment par une valeur élevée de la température de fléchissement sous charge, en abréviation : TFSC), pour supporter sans inconvénient, au moment des opérations de dépôt du revêtement magnétique, d'une part le contact avec les solvants ou mélanges de solvants mis en oeuvre lorsqu'il s'agit de déposer une dispersion de particules magnétiques (cas des couches magnétiques à base de pigments magnétiques) et d'autre part les températures élevées atteintes soit au moment du dépôt (cas des couches minces métalliques), soit au moment de la réticulation des liants (cas des couches à base de pigments magnétiques).

Les alliages d'aluminium, comme par exemple les alliages à base d'aluminium (96 % en poids) et de magnésium (4% en poids) du type AA 5086, satisfont relativement bien à ces différentes exigences. Mais il s'agit de matériaux qui sont coûteux à usiner ou à polir. De plus, il demeure en général, au sein de ces matériaux, des composés intermétalliques oxydables riches en fer donnant lieu à la formation de zones ségrégées de taille allant de 2 à 10 µm qui se comportent de façon différente soit lors de l'usinage et du polissage, soit lors du vieillissement.

Le verre peut constituer aussi un matériau relativement bien adapté en tant que substrat du revêtement magnétique pour disque d' enregistrement. Cependant, on doit passer en revue les inconvénients qui lui sont le plus souvent prêtés : le verre est d'abord fragile ; au sens habituel de la science des matériaux, fragilité signifie absence de plasticité et rupture brutale sous l'effet de chocs ; de plus, le verre est coûteux à façonner et à polir ; enfin, il peut se poser aussi des problèmes au niveau de l'adhérence de revêtement magnétique qu'il recevra.

Du fait de la part élevée du prix du substrat aluminium dans le coût global de fabrication d'un disque magnétique rigide (de l'ordre de 30 %), ainsi que le surcoût lié à la nécessité de protéger la surface du substrat par une couche anti-corrosion (par exemple dépôt de nickel électrolytique) dans le cas d'un disque à couche magnétique mince et du fait encore des nombreux inconvénients présentés par le verre, on a été amené à rechercher d'autres matériaux plus intéressants pour la réalisation de substrats de disques magnétiques rigides. L'apparition de nouveaux polymères thermoplastiques aux propriétés intéressantes et l'utilisation du moulage par injection dans le domaine de l'audiovisuel ont conduit à envisager le remplacement de l'aluminium et du verre par un polymère approprié. Il s'agit là de matériaux généralement bon marché qui sont très légers et présentent donc un faible moment d'inertie. Cependant, il est assez difficile d'obtenir pour les substrats circulaires issus de ces matériaux polymères l'ensemble des propriétés souhaitées suivantes :

- un module d'élasticité dans le sens radial élevé, de préférence bien supérieur à 5 000 MPa (mesuré à EH50 et à 25° C selon la norme NF T 51034).
- un faible coefficient d'expansion thermique dans le sens radial comparable ou même inférieur à celui correspondant à l'aluminium qui est de l'ordre de 30 µm/m/°C ;
- une TFSC élevée au moins égale à 150° C, pour par exemple faire passer sans inconvénient le disque revêtu dans une étuve chauffée dans le but de procéder à une réticulation du liant présent dans la matière magnétisable qui est déposée ;
- un retrait au démoulage très faible et de préférence inexistant ;
- une bonne résistance aux produits chimiques pour que le substrat en polymère ne soit agressé par exemple par les solvants pouvant servir dans la préparation de la dispersion liquide contenant la matière magnétisable qui est déposée sur le support ;

- une inaltérabilité aux agents atmosphériques tel que l'humidité dans les conditions de service qui peut entraîner, dans le cas contraire, des variations dimensionnelles égales ou supérieures à celles induites par une différence de température.

A noter que l'on peut rencontrer encore des difficultés au moment de l'injection du polymère si on ne prend pas garde de partir d'un matériau très fluide à l'état fondu ; les difficultés que l'on rencontre avec des produits visqueux peuvent induire des contraintes internes qui se traduiront dans le substrat fini par des défauts de surface et feront apparaître le phénomène de voile inhérent aux produits visqueux moulés en parois minces.

Actuellement, des substrats polymères acceptables semblent être obtenus (cf. la revue Plastics Technology, Avril 1985, pages 73 et suivantes), avec :
- des polyétherimides comme par exemple le produit commercialisé sous la marque déposée ULTEM 1000 ; ce polymère présente cependant une rigidité faible marquée par un module d'élasticité d'environ 3 000 MPa, et un coefficient d'expansion thermique dans le sens radial élevé d'environ 56 µm/m/°C qui le rend incompatible avec tous les systèmes de suivi de piste existant pour les disques rigides comprenant un substrat en aluminium ;
- des polycarbonates ou des polymères acryliques (cf. aussi JA-A-59/231.750), mais ces matéraux ont l'un et l'autre une tenue en température trop limitée.

Un des objets principaux de la présente invention est de fournir un substrat rigide d'enregistrement magnétique à base d'un polymère :
- pouvant être préparé aisément par moulage par injection,
- apportant au niveau du substrat fini les avantages des matières plastiques, notamment un excellent état de surface, la légereté et un faible coût de production,
- et permettant de s'affranchir au moins des deux inconvénients résidant dans une rigidité faible et dans un coefficient d'expansion thermique trop élevé.

On sait corriger les valeurs naturelles des matériaux plastiques en matière de rigidité (quand elle est trop faible) et de coefficient d'expansion thermique (quand il est trop élevé) par addition de charges. Mais pour mouler des substrats rigides en matière plastique, on doit éviter d'utiliser des charges dont la présence pourra jouer un rôle néfaste sur les propriétés d'état de surface.

Par ailleurs, on peut accroître le module d'élasticité des matériaux thermoplastiques par mono ou biétirage, mais ces procédés sont inapplicables au cas d'un substrat circulaire, rigide qui doit respecter des critères de planéité et de régularité d'épaisseur.

Dans la présente invention, on met en oeuvre un matériau polymère connu dont l'intérêt n'a pas été étudié jusqu'ici pour la confection de substrats de disques rigides d'enregistrement magnétique, ledit matériau polymère ayant des caractéristiques intrinsèques particulières qui se combinent avantageusement et de manière inattendue, avec l'influence des conditions de transformation pour aboutir aux propriétés souhaitées dont on a parlé ci-avant.

Plus précisément, la présente invention dans son premier objet concerne un substrat en matière polymère, rigide, circulaire, lisse et mince, pour disque d'enregistrement magnétique, caractérisé par les points suivants :
. ledit polymère est un polymère thermotrope choisi parmi les polyesters totalement aromatiques, les polyesters alkylaromatiques, les poly(ester-amides) totalement aromatiques, les poly(ester-amides) alkylaromatiques, les polyazométhines aromatiques, les polyesters carbonates aromatiques et les mélanges de ces polymères et il possède une température d'écoulement se situant dans l'intervalle allant de 200° C à 350° C et une viscosité inhérente au moins égale à 1 $dlg^{-1}$ ;
. ledit substrat est soumis pendant sa prépartion à une orientation moléculaire très élevée, ladite préparation consistant à procéder à une opération de moulage du polymère thermotrope par injection dans un moule approprié équipé d'un système d'injection central de la matière polymère, la température des parois dudit moule se situant dans l'intervalle allant de 100° C à 200° C, la température du polymère fondu injecté se situant dans l'intervalle allant de 280° C à 350° C, la durée de l'injection se situant des l'intervalle allant de 2 à 10 secondes, la pression d'injection se situant dans l'intervalle allant de 80 à 160 MPa et la pression de maintien après injection se situant dans l'intervalle allant de 40 à 120 MPa ;
. le dit substrat moulé possède une densité inférieure à 1,8, un module d'élasticité dans le sens radial allant de 9000 MPa à 18 000 MPa, un coefficient d'expansion thermique dans le sens radial qui se situe entre 10 et 20 µm/m/° C et une température de flexion sous charge au moins égale à 150° C.

Dans les conditions de la transformation, il se développe une orientation naturelle qui, du fait d'une alimentation au centre de la pièce, se développe de façon favorable et isotrope dans le plan dans le cas d'une géométrie à symétrie circulaire pour créer une structure présentant les propriétés attendues.

Les substrats circulaires moulés obtenus possèdent généralement les dimensions principales suivantes : diamètre extérieur : compris entre 70 mm et 360 mm ; épaisseur : comprise entre 1 mm et 2 mm. Typiquement, les formats qui sont les plus intéressants, parce que les plus répandus, sont les suivants : les substrats, de diamètes 90 mm (3 pouces 1/2) et 130 mm (5 pouces 1/4) permettant de conduire à des disques de capacité variant de 5 à 16 mégaoctets ; les substrats de diamètre 200 mm (8 pouces) pour la confection de disques utilisés pour les micro-ordinateurs permettant d'atteindre, avec des piles de plusieurs disques fixes, des capacités de 10 à 50 mégaoctets ; les substrats de diamètre 355 mm (14 pouces) destinés à des unités de diques fixes de très forte capacité.

Selon une modalité préférentielle de mise en oeuvre de la présente invention, les polymères thermotropes auxquels on fait appel sont les polyesters totalement aromatiques, les polyesters alkylaromatiques, les polyesters carbonates aromatiques et les mélanges de ces polymères.

Des polyesters totalement aromatiques qui sont thermotropes, c'est à dire qui sont capables de former des masses fondues anisotropes sont décrits par exemple : dans les brevets américains n ° 3.991.013, 3.991.014, 4.066.620, 4.075.262, 4.118.372, 4.130.545, 4.181.792, 4.188.476, 4.219.461, 4.224.433, 4.230.817, 4.346.208 ; et dans la demande de brevet européen n ° 86420013.4 publiée sous le n ° 0191.705.

Des polyesters alkylaromatiques qui sont thermotropes sont décrits par exemple dans les brevets américains n ° 3.778.410, 3.804.805, 4.248.995, 4.311.824 et 4.355.133.

Des polyesters carbonates qui sont thermotropes sont décrits par exemple dans les brevets américains n ° 4.107.143, 4.284.757 et 4.371.660.

Les polymères thermotropes qui sont choisis pour la mise en oeuvre de la présente invention sont ceux, appartenant aux familles générales ou préférées précitées, qui possèdent une température d'écoulement se situant dans l'intervalle allant de 200° C à 350° C et qui présentent une viscosité inhérente au moins égale à 1 $dlg^{-1}$ et se situant plus précisément dans l'intervalle allant de 1,1 à 4,0 $dlg^{-1}$. On entend par "température d'écoulement", la température à laquelle les bords d'un échantillon sous forme de copeau de polymère ou de fibre coupée commencent à s'arrondir ; cette température est déterminée par observation visuelle de l'échantillon sur une lamelle couvre-objet pour une vitesse de montée en température appropriée généralement de l'ordre de 10° C à 20° C par minute, observation faite à l'aide d'un microscope équipé d'une platine chauffante connu dans le commerce sous la marque THERMOPAN. A propos de la viscosité inhérente, on précisera qu'elle est mesurée à 25° C sur une solution renfermant 0,5 g de polymère pour 100 $cm^3$ d'un mélange solvant parachlorophénol/ dichloro-1,2 éthane (50/50 en volume).

Des polyesters totalement aromatiques thermotropes qui sont tout spécialement préférés pour la mise en oeuvre de la présente invention sont ceux décrits dans la demande de brevet européen N °86420013.4 publiée sous le n ° 0191.705. Ces polyesters présentent les particularités suivantes :

- ils comprennent des unités de récurrence de formules (I), éventuellement (II), (III) et (IV) :

(I) désignant la structure :

(I) désignant la structure : 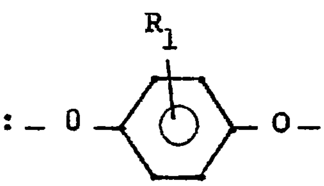

dans laquelle $R_1$ représente un radical méthyle ou éthyle ou un atome de chlore ou de brome, les unités (I) pouvant être identiques ou différentes entre elles,

(II) désignant la structure : 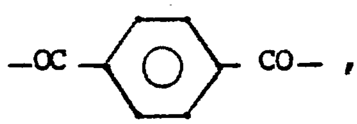 ,

(III) désignant la structure : 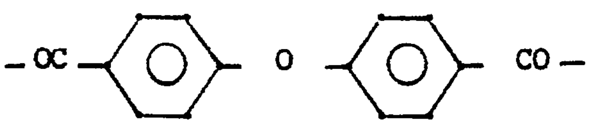 ,

(IV) désignant la structure : 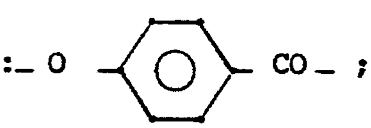 ;

- le rapport molaire des unités (I) par rapport à la somme des unités (II) + (III) se situe dans l'intervalle allant de 0,95 à 1,05 :

- la quantité des unités (II) dans le mélange (II) + (III) se situe dans l'intervalle allant de 0 à 70 % en mole et celle des unités (III), par rapport à la même référence, se situe dans l'intervalle allant de 100 à 30 % en mole ;

- la quantité des unités (IV), exprimée par rapport à la quantité des unités (I), se situe dans l'intervalle allant de 10 à 300 % en mole.

Ces polyesters totalement aromatiques spécialement préféres englobent aussi les polymères qui peuvent contenir en outre dans leur structure des unités aromatiques génératrices de fonctions esters (unités dioxy et/ou unités dicarbonyle et/ou unités mixtes oxy/carbonyle) ayant une structure autre que celle des unités (I), (II), (III) et (IV), la quantité totale de ces unités supplémentaires étant au plus égale à 10 % en mole par rapport à la quantité des unités (I). Une liste non limitative de ces unités supplémentaires est la suivante :

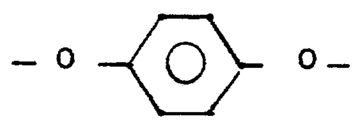

(I')

et/ou 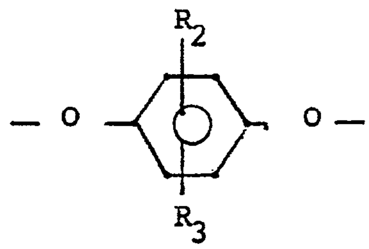

(I") où $R_2$ et $R_3$, qui peuvent être identiques ou différents, ont chacun la définition donnée ci-avant pour $R_1$, les unités (I") pouvant être identiques ou différentes entre elles,

et/ou 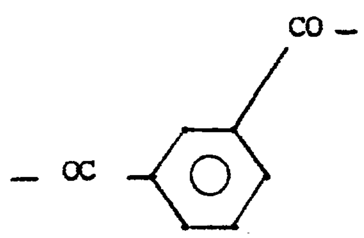

(II')

et/ou 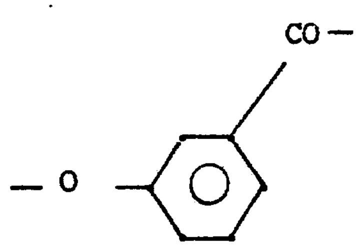

(IV')

Des polyesters alkylaromatiques thermotropes qui sont tout spécialement préférés sont ceux décrits dans les brevets américains n ° 4.248.995 et 4.311.824. Ces polyesters sont constitués d'unités de formule :

(V) $(-O-X_1-O-)_a\ (-O-X_2-O-)_b\ (-O-X_3-O-)_c$

(VI) $-CO-Y-CO-$

(VII) $-CO-Z-CO-$

dans laquelle :
. $X_1$ représente un radical phénylène-1,4 monosubstitué par un groupe méthyle, éthyle ou un atome de chlore ou brome,
. $X_2$ un radical phénylène-1,4 non substitué,
. $X_3$ représente un radical phénylène-1,4 disubstitué par deux groupes méthyle, éthyle ou 2 atomes de chlore ou brome, ou un radical diphénylène-4,4′ ou p-p′-diphénylène éther dans lequel chaque noyau aromatique peut être substitué par un groupe méthyle, éthyle ou un atome de chlore ou brome,
avec 0,4 ≤αμρ¨ a ≤αμρ¨ 1
0 ≤αμρ¨ b ≤αμρ¨ 0,6
0 ≤αμρ¨ c ≤αμρ¨ 0,1
et a + b + c = 1,
. Y représente :
- un radical phénylène-1,4, cyclohexylène-1,4
- ou un radical comportant deux groupes phénylène pouvant être reliés entre eux par une liaison simple ou une chaîne acyclique pouvant comporter jusqu'à 8 atomes de carbone, et éventuellement 1 ou 2 hétéroatomes,
- ou un radical aromatique divalent comportant au moins deux noyaux phényles condensés dans lequel les liaisons rattachées aux groupes carbonyles sont opposées et parallèles, et
. Z représente un radical - $(CH_2)_n$- avec 3 ≤ αμρ¨ n ≤ αμρ¨ 10
. le rapport molaire Z/Y + Z étant compris entre 20 et 50 %.

Des polyesters carbonates thermotropes qui sont tout spécialement préférés sont ceux décrits dans le brevet américain n °4.284.757. Ces polyesters sont constitués d'unités de formule :

(VIII) $(-O-R_4-O-)_{a'}\quad (-O-R_5-O-)_{b'}$

(IX) $-\overset{O}{\overset{\|}{C}}-$

(X) $-CO-R_6-CO-$

dans lesquelles :
. les radicaux $R_4$, identiques, représentent chacun un radical phénylène-1,4 monosubstitué par un groupe méthyle, éthyle, ou un atome de chlore ou de brome :
. les radicaux $R_5$représentent chacun un radical phénylène-1,4 non substitué ;
. avec 0,3≤ αμρ¨ a′ ≤ αμρ¨ 1 ; 0≤ αμρ¨b′ ≤ αμρ¨0,7 ; et a′ + b′ = 1 ;
. les radicaux $R_6$, qui peuvent être identiques ou différents, représentent chacun un radical choisi parmi les groupes phénylène-1,4, cyclohexylène-1,4, biphénylène-4,4′, naphtylène-2,6, éthylènedioxy-4,4′ diphénylène-1,1′, butylènedioxy -4,4′ diphénylène-1,1′, hexylènedioxy-4,4′ diphénylène-1,1′ ; la quantité des unités (IX) dans le mélange (IX) et (X) étant comprise entre 30 et 90 % en mole ; et le rapport molaire des unités (VIII) par rapport à la somme des unités (IX) + (X) étant compris entre 0,95 et 1,05.

Les substrats rigides, circulaires et minces, conformes à la présente invention sont réalisés au moyen d'un procédé de moulage par injection en opérant dans la plage d'anisotropie du polymère thermotrope mis en oeuvre. On fera noter que la thermotropie est facile à mettre en évidence lorsqu'on observe le polymère à l'état fondu dans un système optique équipé de deux polariseurs croisés(90° C) ; il se produit pour les échantillons anisotropes une biréfringence et une transmission de la lumière polarisée à travers les polariseurs croisés. La mise en évidence de l'anisotropie des polyesters selon la présente invention a été effectuée par la méthode thermo-optique TOT décrite dans le brevet français 2 270 282. On entend par "plage d'anisotropie", l'intervalle de température qui part de la température à laquelle apparaît la biréfringence et la transmission de la lumière à travers les deux polariseurs croisés et qui se situe au-dessus de ladite température, intervalle ayant une borne supérieure variable et dans lequel la masse fondue est anisotrope sans aucun risque de es fondues anisotropes qui sont injectées dans le cadre de la présente invention possèdent une plage d'anisotropie étalée sur au moins 30° C.

Plus précisément, les substrats conformes à la présente invention sont réalisés en injectant, à l'aide d'un matériel connu en soi, la masse fondue anisotrope dans un moule circulaire dont les caractéristiques géométriques sont adaptées aux dimensions souhaitées pour les substrats désirés et qui est équipé d'un système permettant une injection central de la matière polymère. Comme exemples de dimensions

de moule, on citera les caractéristiques principales suivantes : diamètre extérieur compris entre 70 mm et 360 mm ; épaisseur : 1 à 2 mm. Les conditions de mise en oeuvre permettant d'obtenir des substrats conformes à la présente sont celles indiquées ci-avant, c'est à dire : température des parois du moule : 100° C à 200° C; température du polymère fondu : 280° C à 350° C ; durée d'injection : 2 à 10 secondes ; pression d'injection : 80 MPa à 160 MPa ; pression de maintien : 40 MPa à 120 MPa.

Les substrats circulaires moulés obtenus possèdent une basse densité inférieure à 1,8 et présentent l'ensemble des propriétés souhaitées. Plus précisément, ils possèdent un module d'élasticité dans le sens radial allant de 9 000 MPa à 18 000 MPa et un coefficient d'expansion thermique dans le sens radial qui est inférieur à 30 µm/m/° C et se situe comme indiqué ci-avant entre 10 et 20 µ m/m/° C. L'intérêt des substrats moulés obtenus ne se limite pas à ces deux propriétés : on fera noter notamment que ces matériaux présentent de plus une TFSC élevée, au moins égale à 150° C, qui peut atteindre 240° C et même davantage et une bonne stabilité dimensionnelle avec de faibles valeurs de retrait au démoulage et que, s'agissant des propriétés physico-chimiques, ils sont par nature insensibles aux solvants et très sensibles à l'humidité. Par ailleurs, les masses fondues anisotropes utilisées dans les opérations de moulage par injection ont une très grande fluidité à chaud ce qui permet d'obtenir des articles présentant un excellent profil de surface ; plus précisément, les substrats moulés obtenus sont parfaitement lisses (la rugosité superficielle est inférieure à 0,05 µm)et possèdent une parfaite régularité de leur épaisseur.

Après l'opération de moulage, les substrats obtenus peuvent subir avant ou après démoulage un traitement thermique à température élevée, mais inférieure à la température de fusion du polymère. Après démoulage et refroidissement, les substrats obtenus sont soumis au traitement classique visant à faite (ou à parfaire la finition de) l'évidement central, puis ils reçoivent ensuite sur au moins une de leurs surfaces un revêtement magnétique après un dégraissage préalable de la (ou des) surface(s) concernée(s).

La présente invention, dans un second objet, concerne donc aussi les disques d'enregistrement magnétiques résultant du revêtement magnétique des substrats moulés qui ont été décrits précédemment.

Plus précisement, la présente invention concerne encore des disques d'enregistrement magnétiques comprenant un substrat en matière polymère, rigide, circulaire, lisse et mince et un revêtement magnétique de type particulaire ou couche mince déposé sur au moins une de ses faces, caractérisé en ce que ledit substrat répond aux définitions données ci-avant dans le présent mémoire.

Du fait de la résistance élevée des substrats conformes à la présente invention vis à vis des agents chimiques et de la température, il est possible d'utiliser toutes les méthodes de dépôt d'une couche magnétique.

Notamment, s'agissant d'un revêtement magnétique de type particulaire à base de pigments magnétiques, on peut utiliser la méthode de l'enduction unitaire dite "à la tournette" ou centrifuge au moyen d'une buse déposant par coulée le revêtement magnétique sur le substrat fixé sur un plateau tournant disposé horizontalement ou verticalement. La couche d'enregistrement magnétique comprend généralement des particules magnétiques, qui peuvent être par exemple de l'oxyde de fer ($\gamma$-$Fe_2O_3$ plus éventuellement $Fe_3O_4$) dopé éventuellement avec du cobalt, du fer passivé, du nitrure de fer, de l'hexaferrite de barium, dispersées dans un solvant ou un mélange de solvants et un liant appropriés. La couche magnétique peut contenir en outre un lubrifiant comme dans la technique de type WINCHESTER classique. Après enduction et séchage, le substrat revêtu est soumis à un traitement thermique en vue de procéder à la réticulation du liant, ce traitement se pratiquant par exemple vers 200° C lorsque le liant mis en oeuvre est une résine époxy. D'autres moyens de réticulation peuvent cependant être appliqués suivant la nature du liant : par exemple un traitement par rayonnement ou par faisceau d'électrons. Après cette étape de réticulation, le disque magnétique obtenu est soumis à des opérations classiques de polissage et nettoyage. L'épaisseur de la couche à base de pigments magnétiques déposée se situe généralement dans l'intervalle allant de 0,3 à 5 µm selon le type d'application envisagée pour le disque. A noter que le disque peut recevoir avant emploi le dépôt d'une mince couche lubrifiante.

Une autre technique de dépôt utilisable cette fois pour obtenir un revêtement magnétique de type couche mince, consiste à évaporer sous vide par voie thermique ou par pulvérisation cathodique une composition métallique à basse de cobalt, de chrome, de nickel ou de leurs alliages, cette technique pouvant être suivie le cas échéant par le dépôt d'une couche anticorrosion et/ou celui d'une couche protectrice (à base d'alumine par exemple) ou lubrifiante (à base de carbone par exemple). L'épaisseur de la couche métallique déposée se situe généralement dans l'intervalle allant de 0,05 à 0,2 µm selon le type d'application envisagée pour le disque.

Une variante technique peut consister encore à réaliser le dépôt de la couche magnétique par une méthode électrolytique, sous réserve d'une métallisation préalable du substrat.

Il convient de noter que l'on va retrouver au niveau des disques magnétiques obtenus l'ensemble des bonnes propriétés évoquées ci-avant au niveau du substrat notamment en ce qui concerne l'état de surface (rugosité, planéité), la rigidité (module d'elasticité), la stabilité dimensionnelle (coefficient d'expansion thermique) et la tenue thermique (TFSC).

Les exemples qui suivent sont donnés à titre indicatif, mais non limitatif, pour illustrer l'invention.

EXEMPLE 1

Exemple de préparation d'un substrat rigide, circulaire et mince conforme à la présente invention.

1. Description du polymère thermotrope utilisé :

On prépare un polyester totalement aromatique du type de celui décrit dans la demande de brevet européen n ° 86420013.4 publiée sous le n ° 0191.705.

Dans un réacteur de polycondensation de 7,5 litres agité et chauffé, par un fluide caloporteur circulant dans la double enveloppe du réacteur, muni d'un dispositif de distillation et de balayage par un gaz inerte, on introduit les réactifs et catalyseurs suivants :

(1) - diacétate de chlorohydroquinone : 1028 g
[rapport molaire (1)/(2) + (3) = 1]
(2) - acide téréphtalique : 373 g
[50 % en mole dans mélange (2) + (3)]
(3) - dicarboxy-4,4' diphényléther : 581 g
[50 % en mole dans mélange (2) + (3)]
(4) - acide para-acétoxybensoïque : 275,5 g
[34 % en mole par rapport à (1)]
(5) - acétate de magnésium : 1,13 g
[500 ppm].

Le réacteur est purgé à l'azote, puis chauffé par le fluide caloporteur réglé à 260° C pendant 2 heures et 20 minutes. Le volume d'acide acétique distillé est de 506 $cm^3$ (soit 83 % de la théorie). On élève ensuite progressivement la température du bain métallique jusqu'à 330° C en 40 minutes, en diminuant dans le même temps la pression de $1010.10^2$ Pa à $0,39.10^2$Pa. Après que le distillation d'acide acétique se soit arrêtée, on maintient encore la température de 330° C et la pression de $0,39.10^2$ pendant 12 minutes 30 secondes. Le volume total d'acide acétique recueilli est de 602 $cm^3$ (soit 100 % de la théorie).

Le polymère obtenu est grisâtre et d'aspect fibreux. Il possède une viscosité inhérente de 1,4 $dlg^{-1}$. La température d'écoulement est de 290° C. La plage d'anisotropie va de 290° C jusqu'à plus de 350° C.

2. Moulage du substrat par injection :

Le polymère est mis en oeuvre avec une presse à injecter BATTENFELD BSKM 100/70 S DS 2 000. Le moule circulaire utilisé, à faces polies, possède les caractéristiques suivantes : diamètre : 95 mm ± 0,10 mm ; épaisseur : 2 mm ± 0,025 mm ; injection centrale avec une buse de diamètre : 4 mm.

Les conditions de moulage sont les suivantes :
- température des faces du moule : 130°C,
- température du polymère fondu : 320° C,
- durée d'injection : 2,5 secondes,
- pression d'injection : 120 MPa,
- pression de maintien : 90 MPa.

3. Usinage du substrat :

Après démoulage et refroidissement, on procède dans le substrat au découpage d'un évidement central, coaxial, présentant un diamètre de 25 mm.

4. Propriétés du substrat moulé :

a) Etat de surface

. Rugosité superficielle : 0,02 µm ;
. Défaut de planéité pseudosinusoïdal : période 50 µm ; amplitude : 2 à 4 µm .

[Ces caractéristiques ont été établies à l'aide de l'appareil dénommé TALYSTEP de Taylor-Hobson dans les conditions suivantes : capteur tactile statique : rayon de la pointe : 0,013 mm, le mouvement vertical du capteur étant amplifié électroniquement ; charge de contact du capteur : réglée à 50 mg ; fréquence de coupure du signal : 0,76 mm ; sensibilité : 20 angströms.]

. Retrait au démoulage : néant.

b) Propriétés mécaniques

La détermination des propriétés mécaniques a été réalisée à partir d'éprouvettes prélevées radialement (dans la direction de l'écoulement)et transversalement (dans la direction transverse) dans le substrat moulé obtenu :

. Propriétés en traction :

Les modules et la résistance sont mesurés à 23° C selon les indications de la norme NF T 51034 sur des éprouvettes de type haltère ayant une largeur de 4 mm et une épaisseur de 2 mm, conditionnées à EH 50 :

- module d'élasticité radial (Mr) : 12 700 MPa,
- module d'élasticité transversal ($M_t$) : 6 600 MPa,
- résistance à la rupture radiale : 100 MPa,
- allongement à la rupture : 3 %.

. Coefficient d'expansion thermique :

La stabilité dimensionnelle du substrat a été appréciée par des mesures de coefficient d'expansion thermique linéaire sur des échantillons parallélépipédiques de dimensions 5 x 5 x 2 mm prélevés radialement ( $\alpha$ r) et transversalement ($\alpha_t$) en opérant selon les indications de la norme ASTM D 696-70 dans un intervalle de températures de -30° C à + 30° C et sous azote sec :

- $\alpha$ r : 14 µm/m/° C,
- $\alpha_t$ : 180 µm/m/° C.

. TFSC :

La température de flexion sous charge est mesurée selon les indications de la norme NF T 51005 : elle est égale à 250° C (sous 1,82 MPa).

c) Propriétés physico-chimiques :

. Densité : d = 1,45.

. Cristallinité : la structure est semi-cristalline.

. Résistance aux solvants : excellente ; pour évaluer cette résistance, 7 éprouvettes conformes à la norme NF T 51034 sont immergées dans le solvant porté à une température donnée pendant une durée donnée et on mesure ou bout de ce temps la résistance à la rupture radiale moyenne des 7 éprouvettes. On considère que la résistance au solvant est excellente quand la résistance à la rupture est abaissée à une valeur représentant encore au moins 90 % de la valeur initiale.

| Solvants et conditions de test | Résistance à la rupture : % par rapport à la résistance initiale |
|---|---|
| Trichloroéthylène ; 7 jours à 50° C | 100 % |
| $H_2SO4$ à 37 % ; 7 jours à 50° C | 90 % |
| $H_2SO4$ à 20 % ; 30 jours à 50° C | 100 % |
| HCL à 20 % ; 30 jours à 50° C | 97 % |

. Reprise d'eau : inférieure à 100 ppm ; pour la mesurer, on opère comme indiqué ci-après : une éprouvette conforme à la norme NF T 51034 est séchée pendant 3 heures à 150°C, pesée ($P_o$) puis immergée dans l'eau à 23° C pendant 48 heures ; au bout de ce temps, l'éprouvette est sortie de l'eau, essuyée superficiellement et repesée (p) ; la reprise en eau est égale à $p-p_o/P_o \times 10^6$.

5. Anisotropie :

. Anisotropie des propriétés mécaniques dans le plan : il s'agit du rapport $Mr/M_t$ qui est égal à 12 700/6 600 = 1,92.

. Anisotropie dans l'épaisseur : il s'agit du rapport $\alpha r/\alpha t$ qui est égal à 14/180 = 0,077.

EXEMPLE 2

Exemple de préparation d'un disque magnétique conforme à la présente invention comprenant un revêtement magnétique à base de pigments magnétiques.

1. Préparation du mélange de revêtement magnétique :

Il est préparé par dispersion d'un oxyde de fer aciculaire dopé au cobalt, disponible dans le commerce sous la marque MO 2228 de la Société PFIZER (coercitivité : 320 oersted), dans un mélange comprenant un solvant à base d'éther diméthylique du diéthylèneglycol (diglyme) et d'éthylèneglycol et un système liant à base de résine époxy disponible dans le commerce sous la marque EPIKOTE 1001 de la Société SHELL, d'acétal polyvinylique disponible dans le commerce sous la marque BUTVAR P 74 de la Société MONSANTO et de N-aminopipérazine comme durcisseur. L'extrait sec de la dispersion (pigments + système liant) est de 30 % en poids. Les pigments magnétiques réprésentant 55% de poids du revêtement magnétique déposé et sec.

2. Dépôt du revêtement

On applique ensuite le mélange de revêtement défini ci-dessus sur le substrat de 95 mm de diamètre obtenu à l'issu de l'exemple 1 précédent en utilisant la technique classique d'enduction centrifuge dans laquelle le substrat tourne à environ 300 tours/minute, la centrifugation étant opérée à 1200 tours/minute.

Le substrat revêtu est traité pour évaporer le solvant et est ensuite soumis pendant 4 heures à une température de 190° C pour produire la réticulation des résines du liant. La couche magnétique déposée a une épaisseur de 0,60 µm.

Le disque fini obtenu ne nécessite qu'un léger polissage sur un plateau en feutre, avec le l'alumine en dispersion, avant de servir sur un appareil lecteur-enregistreur. A noter que le disque reçoit encore avant emploi une pulvérisation d'un lubrifiant, consistant en une solution à 1 % en poids dans le FREON 113 de polyperfluoroéther, mis dans le commerce par la Société MONTEFLUOS sous la marque FOMBLIN Z.

Le disque ainsi préparé présente les caractéristiques principales suivantes : rugosité de surface : elle est inférieure à 0,025 µm ; il peut subir sans inconvénient un nombre d'arrêt/démarrage sur lecteur-enregistreur supérieur à 10 000 ; les propriété électriques sont conformes aux valeurs souhaitées.

**Revendications**

1. Substrat en matière polymère, rigide, circulaire, lisse et mince, pour disque d'enregistrement magnétique, caractérisé par les points suivants :
. ledit polymère appartient à la famille des polymères thermotropes et il possède une température d'écoulement se situant dans l'intervalle allant de 200° C à 350° C et une viscosité inhérente au moins égale à 1 $dlg^{-1}$ ;
- ledit substrat est soumis pendant sa préparation à une orientation moléculaire très élevée, ladite préparation consistant à procéder à une opération de moulage du polymère thermotrope par injection dans un moule approprié équipé d'un système d'injection central de la matière polymère, la température des parois dudit moule se situant dans l'intervalle allant de 100° C à 200° C, la température du polymère fondu injecté se situant dans l'intervalle allant de 280° C à 350° C, la durée de l'injection se situant dans l'intervalle allant de 2 à 10 secondes, la pression d'injection se situant dans l'intervalle allant de 80 à 160 MPa et la pression de maintien après injection se situant dans l'intervalle allant de 40 à 120 MPa ;
. le dit substrat moulé possède une densité inférieure à 1,8, un module d'élasticité dans le sens radial allant de 9000 MPa à 18 000 MPa, un coefficient d'expansion thermique dans le sens radial qui se situe entre 10 et 20 µm/m/° C et une température de flexion sans charge au moins égale à 150° C.

2. Substrat selon la revendication 1, caractérisé en ce qu'il possède les dimensions principales suivantes : diamètre extérieur compris entre 70 mm et 360 mm et épaisseur comprise 1 mm et 2 mm.

3. Substrat selon l'une quelconque des revendications 1 et 2, caractérisé en ce que les polymères thermotropes qui conviennent comprennent les polyesters totalement aromatiques, les polyesters alkylaromatiques, les poly(ester-amides) totalement aromatiques, les poly(ester-amides) alkylaromatiques, les polyazométhines aromatiques, les polyesters carbonates aromatiques et les mélanges de ces polymères.

4. Substrat selon la revendication 3, caractérisé en ce que les polymères thermotropes auxquels on fait appel sont les polyesters totalement aromatiques, les polyesters alkylaromatiques, les polyesters carbonates aromatiques et les mélanges de ces polymères.

5. Substrat selon l'une quelconque des revendications 1 à 4, caractérisé en ce que les polymères thermotropes possèdent une viscosité inhérente se situant dans l'intervalle allant de 1,1 à 4,0 $dlg^{-1}$.

6. Disque d'enregistrement magnétique comprenant un substrat en matière polymère, rigide, circulaire, lisse et mince et un revêtement magnétique de type particulaire ou couche mince déposé sur au moins une de ses faces, caractérisé en ce que ledit substrat répond aux caractéristiques données dans l'une quelconque des revendications 1 à 5 précédentes.

## Patentansprüche

1. Substrat aus einem polymeren, starren, kreisförmigen bzw.' runden, glatten und dünnen Material für magnetische Tonaufnahmeplatten, gekennzeichnet durch die folgenden Merkmale:
Das Polymere ist ein thermotropes Polymeres ausgewählt unter den vollständig aromatischen Polyestern, den alkylaromatischen Polyestern, den vollständig aromatischen Poly(ester-amiden), den alkylaromatischen Poly(ester-amiden), den aromatischen Polyazomethinen, den aromatischen Carbonat-Polyestern und den Gemischen dieser Polymeren, wobei das Polymere eine im Bereich von 200°C bis 350°C liegende Fließtemperatur und eine inhärente Viskosität von zumindest 1 $dlg^{-1}$ besitzt; das Substrat während seiner Herstellung einer sehr hohen molekularen Orientierung unterzogen wird, wobei die Herstellung darin besteht, eine Verformungsmaßnahme des thermotropen Polymeren durch Einspritzen in eine geeignete Form vorzunehmen, die mit einem System für das zentrale Einspritzen des polymeren Materials versehen ist, wobei die Wandtemperatur der Form im Bereich von 100°C bis 200°C liegt, die Temperatur des eingespritzten geschmolzenen Polymeren im Bereich von 280°C bis 350°C liegt, die Einspritzdauer im Bereich von 2 bis 10 Sekunden liegt, der Einspritzdruck im Bereich von 80 bis 160 MPa und der Aufrechterhaltungsdruck nach dem Einspritzen im Bereich von 40 bis 120 MPa liegt; das geformte Substrat besitzt eine Dichte unterhalb 1,8, einen Elastizitätsmodul in radialer Richtung von 9000 bis 18000 MPa, einen thermischen Expansionskoeffizienten in radialer Richtung, der zwischen 10 und 20 µm/m/°C liegt und eine Biegetemperatur unter Belastung von zumindest 150°C.

2. Substrat gemäß Anspruch 1, dadurch gekennzeichnet, daß es die folgenden wesentlichen Dimensionen besitzt: Außendurchmesser zwischen 70 und 360 mm und Dicke bzw. Stärke zwischen 1 und 2 mm.

3. Substrat gemäß Anspruch 2, dadurch gekennzeichnet, daß die thermotropen Polymeren, auf die man zurückgreift, vollständig aromatische Polyester, alkylaromatische Polyester, aromatische Carbonat-Polyester und Mischungen dieser Polymeren sind.

4. Substrat gemäß einem der Ansprüche 1 bis 3, dadurch gekennzeichnet, daß die thermotropen Polymeren eine inhärente Viskosität im Bereich von 1,1 bis 4,0 $dlg^{-1}$ besitzen.

5. Magnetische Platte für die Tonaufnahme, enthaltend ein Substrat aus einem polymeren, starren, kreisförmigen bzw. runden, glatten und dünnen Material und eine magnetische Beschichtung vom Partikeltyp oder vom Typ einer dünnen Schicht, die zumindest auf eine ihrer Oberflächen aufgetragen ist, dadurch gekennzeichnet, daß das Substrat den in einem der vorhergehenden Ansprüche 1 bis 4 angegebenen Merkmalen entspricht.

## Claims

1. Smooth, thin, circular, rigid substrate made of polymeric material, for a magnetic recording disc, characterized by the following points:
the said polymer is a thermotropic polymer chosen from wholly aromatic polyesters, alkylaromatic polyesters, wholly aromatic poly(esteramides), alkylaromatic poly(esteramides), aromatic polyazomethines, aromatic carbonate polyesters and mixtures of these polymers, the said polymer having a flow temperature which lies in the range from 200°C to 350°C and an inherent viscosity of at least 1 $dlg^{-1}$; during its preparation, the said substrate is subjected to a very high molecular orientation, the said preparation consisting in performing an injection-moulding operation on the thermotropic polymer in a suitable mould fitted with a central injection system for the polymeric material, the temperature of the walls of the said mould lying in the range from 100°C to 200°C, the temperature of the injected molten polymer lying in the range from 280°C to 350°C, the injection time lying in the range from 2 to 10 seconds, the injection pressure lying in the range from 80 to 160 MPa and the holding pressure after injection lying in the range from 40 to 120 MPa;
the said moulded substrate has a relative density of less than 1.8, a modulus of elasticity in the radial direction ranging from 9, 000 MPa to 18, 000 MPa, a coefficient of thermal expansion in the radial direction which lies between 10 and 20 µm/m/°C and a deformation temperature under load of at least 150°C.

2. Substrate according to Claim 1, characterized in that it has the following principal dimensions: external diameter from 70 mm to 360 mm and thickness from 1 mm to 2 mm.

3. Substrate according to Claim 2, characterized in that the thermotropic polymers which are employed are wholly aromatic polyesters, alkylaromatic polyesters, aromatic carbonate polyesters and mixtures of these polymers.

4. Substrate according to any one of Claims 1 to 3, characterized in that the thermotropic polymers have an inherent viscosity lying in the range from 1.1 to 4.0 dl $g^{-1}$.

5. Magnetic recording disc comprising a smooth, thin, circular, rigid substrate made of polymeric material and a magnetic coating of particulate or thinlayer type deposited onto at least one of its faces, characterized in that the said substrate corresponds to the characteristics given in any one of the preceding Calims 1 to 4.